# EUROPEAN PATENT APPLICATION

(11) **EP 2 249 059 A1**
(43) Date of publication of application: **10.11.2010**
(21) Application number: 09715801.8
(22) Date of filing: 25.02.2009
(51) Int. Cl.: F16G 5/16

(54) **DEVICE FOR ASSEMBLING BELT, METHOD OF ASSEMBLING BELT, AND METHOD OF MANUFACTURING BELT**

(30) Priority: 28.02.2008 JP 2008047850
(71) Applicant: Toyota Jidosha Kabushiki Kaisha, Toyota-shi, Aichi 471-8571 (JP)
(72) Inventor: SAKAI, Noboru, Toyota-shi Aichi 471-8571 (JP); IGUCHI, Tetsuji, Toyota-shi Aichi 471-8571 (JP); OHARA, Yukihiro, Toyota-shi Aichi 471-8571 (JP)
(74) Representative: TBK-Patent
(86) International application number: PCT/JP2009/053378
(87) International publication number: WO 2009/107640

(57) **Abstract**

To efficiently assemble or manufacture a belt by fastening a plurality of elements in a circular manner using a ring.

A belt assembling method for assembling a belt 1, by fastening a plurality of plate-like elements 6 in a circular manner, using a ring 9 having a width wider than an opening width of an opening 12 formed in the element 6, comprising: holding the elements 6 in an inner circumferential side of the ring 9 in an orientation to open the opening 12 toward an inner circumferential face of the ring 9; inclining the ring 9 while displacing widthwise by pushing an outer circumferential face of the ring 9 partially toward the opening 12, at a side of one of open ends of the opening 12; and relatively moving the ring 9 and the element 6 close to each other thereby letting the inclined ring 9 through the opening 12 to fit the ring 9 with the element 6.

## Description

### TECHNICAL FIELD

This invention relates to an assembling apparatus, an assembling method and a manufacturing method for assembling a belt, by juxtaposing a plurality of plate-like elements in a same orientation and in a circular manner, and by fastening those elements using a ring.

### BACKGROUND ART

A belt formed by juxtaposing a plurality of metal pieces called an "element" or a "block" in a circular manner, and by fastening the juxtaposing metal pieces by an endless carrier called a "ring" or a "hoop" is known in the prior art to be used in a continuously variable transmission. The belt of this kind is adapted to transmit the torque by a pushing force among the metal pieces thus juxtaposed to be contacted to one another. Specifically the metal pieces existing in the groove of a drive pulley are sequentially pushed out of the groove by a rotation of the pulley while pushing the metal pieces in front of those metal pieces. The metal pieces thus being pushed forward are eventually entered into a groove of a driven pulley As a result, the torque of the drive pulley is transmitted to the driven pulley by such advancement of the metal pieces.

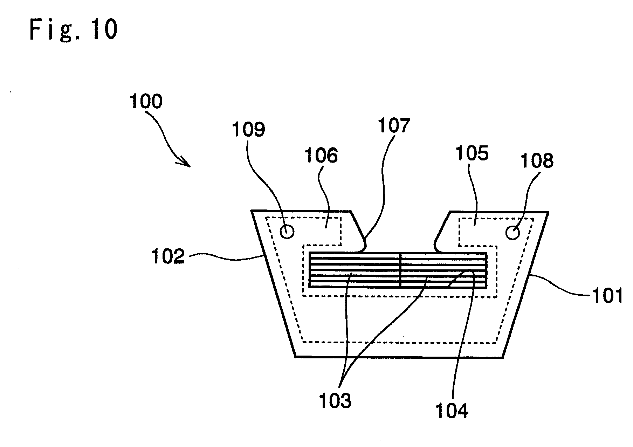

An example of the belt thus structured is disclosed in Japanese Patent Laid-Open No. 2000-205342. According to the teachings of Japanese Patent Laid-Open No. 2000-205342, an annular belt is formed by fastening a plurality of trapezoidal blocks using two rows of endless carriers. A block 100 is shown in Fig. 10 of the present application in more detail. The blocks 100 shown in Fig. 10 are juxtaposed annularly in an orientation to situate a short side thereof in an inner circumferential side. Lateral faces 101 and 102 of the block 100 thus juxtaposed are respectively inclined to be parallel to inner faces of a V-shaped groove of a not shown pulley In the width center at the center of height of the block 100, there is formed a saddle face 104 on which the endless carriers 103 are disposed. A width of the saddle face 104 is wider than the total width of the carrier 103 arranged parallel to each other.

In addition, in order to prevent a detachment of the endless carrier 103 from the saddle face 104, in other words, in order to prevent a disengagement of the block 100 from the endless carrier 103, the block 100 is provided with stopper portions 105 and 106. Specifically, a shape of the stopper portions 105 and 106 is inverse L-shaped portion, and those the stopper portions 105 and 106 are erected respectively on both width ends of the saddle face 104 to cover width end portions of the endless carriers 103 from above. A clearance between the stopper portions 105 and 106 serves as an opening 107 to the saddle face 104. Protruding portions 108 and 109 whose cross-section is arcuate are respectively formed on one of the faces (e.g., on the front face) of the stopper portions 105 and 106, and (not shown) concave portions are respectively formed on the opposite side of the protruding portions 108 and 109. Therefore, the protruding portions 108 and 109 are respectively inserted into the concave portions of the adjoining block 100.

The above-described endless carrier not only fastens the metal blocks juxtaposed annularly by contacting with the saddle face but also pulls out the blocks from the groove of the pulley For this purpose, as taught by Japanese Patent Laid-Open No. 2000-205342, the block must be provided with the stopper portions. In order to situate the carrier on the width center of the block as taught by Japanese Patent Laid-Open No. 2000-205342, the stopper portions are erected on both width ends of the block thereby holding side edges of the carrier.

For this purpose, a clearance between the stopper portions, that is, a width of the opening has to be narrower than the total width of the endless carrier fastening the blocks. Therefore, in case of fastening the blocks by the carrier, the carrier is not allowed to pass though the opening of the block while being arranged in a relative position thereof to be situated after the completion of the assembling work. That is, the blocks cannot be fastened by the carrier thus arranged. In order to avoid such disadvantage, some sort of improvement is required to fasten the blocks by the endless carrier. However, any method or device for fastening the blocks continuously or efficiently by the carrier has not yet been developed in the prior art.

### DISCLOSURE OF THE INVENTION

The present invention has been conceived noting the technical problems thus far described, and its object is to efficiently assemble or manufacture a belt by fastening a plurality of elements in a circular manner using a ring.

In order to achieve the above-mentioned object, according to the present invention, there is provided a belt assembling apparatus for assembling a belt, by fastening a plurality of plate-like elements juxtaposed in a same orientation and in a circular manner, using a ring having a width wider than an opening width of an opening formed in the element, characterized by comprising: an element holding member, which holds the elements in an inner circumferential side of the ring in an orientation to open the opening of the element toward an inner circumferential face of the ring; an inclining and pushing member, which inclines the ring while displacing the ring widthwise relatively; and wherein the elements held by the holding member are attached to the ring by relatively approximating the inclined ring and the elements thereby letting the ring through the opening.

Preferably, the aforementioned inclining and pushing member includes a member which pushes an outer circumferential face of the ring partially toward the opening, at a side of one of open ends of the opening.

The ring is formed by a plurality of ring members, and an individual width of the ring member is narrower than the opening width of the opening but a total width of the ring members being arranged parallel to each other is wider than the opening width of the opening.

The aforementioned element holding member is adapted to hold the element in the inner circumferential side of the ring members arranged parallel to each other. Meanwhile, the aforementioned inclining and pushing member is adapted to push one of the ring members arranged parallel to each other situated on the side of one of the open ends. In addition, the belt assembling apparatus comprises a parallel pushing member which pushes another ring member toward the element through the opening prior to pushing said one of the ring members toward the opening by the inclining and pushing member.

The element comprises a saddle face on which the ring formed by arranging the two rows of ring members parallel to each other is disposed; and a stopper portion which is erected respectively on width ends of the saddle face to protrude toward an outer circumferential side in case the elements are juxtaposed in a circular manner, and which holds the ring disposed on the saddle face. Therefore, a clearance between the stopper portions serves as the opening.

The element holding member is adapted to reciprocate between a position at the inner circumference of the ring and a position deviated away from the inner circumference of the ring in an axial direction of the ring.

The inclining and pushing member and the parallel pushing member may be arranged adjacent to each other in a width direction of the ring members arranged parallel to each other.

According to another aspect of the present invention, there is provided a belt assembling method for assembling a belt, by fastening a plurality of plate-like elements in a same orientation and in a circular manner, using a ring having a width wider than an opening width of an opening formed in the element, characterized by comprising: holding the elements in an inner circumferential side of the ring in an orientation to open the opening of the element toward an inner circumferential face of the ring; inclining the ring while displacing widthwise by pushing an outer circumferential face of the ring partially toward the opening, at a side of one of open ends of the opening; and relatively moving the ring and the element close to each other thereby letting the inclined ring through the opening to fit the ring with the element.

According to still another aspect of the present invention, there is provided a belt manufacturing method for manufacturing a belt, by fastening a plurality of plate-like elements in a same orientation and in a circular manner, using a ring having a width wider than an opening width of an opening formed in the element, characterized by comprising: holding the ring while applying a predetermined tension to the ring; holding the elements in an inner circumferential side of the ring in an orientation to open the opening of the element toward an inner circumferential face of the ring; inclining the ring while displacing widthwise by pushing an outer circumferential face of the ring partially toward the opening, at a side of one of open ends of the opening; and relatively moving the ring and the element close to each other thereby letting the inclined ring through the opening to fit the ring with the element.

As described, the ring is formed by the plurality of ring members, and an individual width of the ring member is narrower than the opening width of the opening but a total width of the ring members being arranged parallel to each other is wider than the opening width of the opening.

As also described, the element comprises a saddle face on which the ring formed by arranging the two rows of ring members parallel to each other is disposed; and a stopper portion which is erected respectively on width ends of the saddle face to protrude toward an outer circumferential side in case the elements are juxtaposed in a circular manner, and which holds the ring disposed on the saddle face. Therefore, a clearance between the stopper portions serves as the opening.

According to the apparatus and the method of the present invention, the ring is thus inclined by pushing the outer circumferential face of the ring toward the element situated to orient the opening thereof to open to the inner circumferential face of the ring. Specifically, in case of pushing the ring partially at a side of one of the open ends of the opening, the pushing force acts on a portion of the ring at a spot deviated from a width center of the ring. Consequently, the ring is twisted to be inclined and pushed to be displaced slightly in its width direction. A side edge of the ring thus pushed is displaced inward side of the opening of the element, and the pushed ring and the element are moved to get closer to each other. Therefore, the side edge of the ring is allowed to enter into the opening. Thus, even if the width of the ring is wider than the width of the opening, the ring can be entered into the opening of the element by displacing one of the side edges of the ring. In addition, the ring and the element being opposed to each other are approximated by pushing a portion of the ring as described above. Therefore, the element can be fitted with the ring easily without requiring a complex movement. Moreover, an assembling work and a manufacturing work of the belt can be automated easily

Especially, even if the total width of the plurality of ring members arranged parallel to each other is wider than the opening width of the element, the ring members and the element can be fitted with each other easily Furthermore, even if the stopper portions for holding the ring members are formed on the element, the belt can be assembled easily by applying a linear operational force to the ring member or to the element.

### BRIEF DESCRIPTION OF THE DRAWINGS

Fig. 1 is a front view showing one example of the belt assembling apparatus according to the present invention.
Fig. 2 is a view from the direction indicated by the arrow II in Fig. 1.
Fig. 3 is a perspective view showing one example of the cartridge.
Fig. 4 is a front view showing one example of the fixture for keeping the ring strained.
Fig. 5 is a plain view of the fixture shown in Fig. 4.
Fig. 6 is a partial view showing a groove of the roller.
Fig. 7 is an explanatory drawing showing assembling procedures of the method according to the present invention.
Fig. 8 is a view schematically showing a continuously variable transmission using the belt to which the present invention is applied.
Fig. 9 is a front view showing the element forming the belt to which the present invention is applied.
Fig. 10 is a front view showing the block used in conventional belts.

### BEST MODE FOR CARRYING OUT THE INVENTION

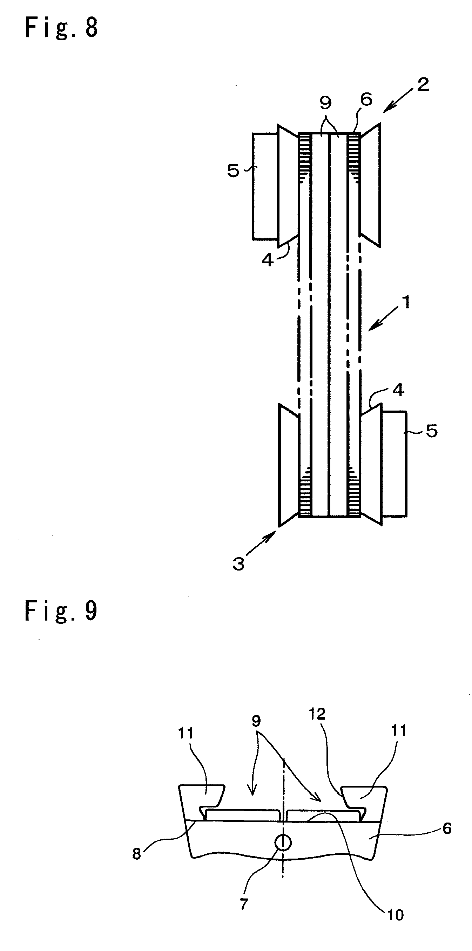

Next, examples of the present invention will be explained hereinafter. A belt to which the present invention is applied is adapted to be used in a continuously variable transmission. Specifically a groove whose cross-sectional shape is V-shaped is formed on an outer circumference of the pulley of the continuously variable transmission, and the belt is applied to the groove of the pulley for the purpose of transmitting torque by a frictional force between the belt and pulleys. For example, as schematically shown in Fig. 8, a belt 1 is applied to a drive pulley 2 and a driven pulley 3 of the continuously variable transmission. Each pulley 2 and 3 comprises a pair of fixed sheave and movable sheave individually having a tapered face and being opposed to each other. Therefore, V-shaped groove 4 is formed between those sheaves, and a width of the groove 4 is varied by reciprocating the movable sheave by an actuator 5 such as hydraulic cylinder.

The belt 1 thus used is formed by fastening a plurality of elements in a circular manner by a ring, and both side faces or lateral faces of the element are tapered to be V-shaped. Fig. 9 shows an example of the element 6 used in the belt 1 shown in Fig. 8. Specifically, the element 6 is a plate-like member made of metal, and the elements 6 of same configuration and same dimensions are juxtaposed annularly in the same orientation. For the purpose of positioning the juxtaposed elements 6 vertically and horizontally, a male connection 7 as a protrusion is formed on one of the faces of the element 6, and a (not shown) female connection as a hole into which the male connection 7 is inserted loosely is formed on the opposite face. Specifically, the hole is formed by partially depressing one of the faces of the element 6, and the male connection 7 is thereby protruded from the opposite face of the element 6. Therefore, by inserting the male connection 7 into the hole of the adjoining element, a relative movement of the juxtaposed elements 6 in the radial direction, that is, in the vertical and horizontal directions can be restricted.

As described, the elements 6 are juxtaposed in a circular manner. Therefore, some of the elements 6 are inevitably juxtaposed not parallel to one another, in other words, some of the elements 6 being juxtaposed are inevitably spread like a fan (i.e., radially) around a center of curvature of the belt 1. In order to allow the elements 6 thus oscillated in a fan-like fashion to be contacted with one another, a rocking edge 8 is formed on the element 6. Specifically, the rocking edge 8 is a boundary or a boundary area at which the thickness of the element 6 is changed, and the rocking edge 8 is formed at a substantially center of the element 6 in the height direction while extending in a width direction of the element 6 (i.e., in a direction parallel with a rotational center axis of the pulley).

In case the belt 1 is applied to the pulleys 2 and 3, a circumferential length of an array of the elements 6 is longer at an upper side of the element 6 (that is, at an outer circumferential side of the belt 1). Therefore, clearances between the elements 6 around the pulley are widened at the upper portion thereof. To the contrary, the circumferential length of the array of the elements 6 is shorter at a lower side of the element 6 (that is, at an inner circumferential side of the belt 1). Therefore, the clearances between the elements 6 are narrowed at the lower portion thereof. For this reason, a thickness of the lower portion of the element 6 is reduced gradually toward a lower end thereof, and the portion at which the thickness of the element 6 is thus changed serves as the rocking edge 8. Thus, the element 6 is allowed to oscillate with respect to the rocking edge 8 to spread in the fan-like fashion, that is, a pitching of the elements 6 is allowed by the rocking edge 8. In addition, the rocking edge 8 is necessary to be formed only on one of the faces of the element 6. For example, the rocking edge 8 is formed on the face on which the male connection 7 is formed.

The element 6 further comprises a saddle face 10 on which a ring 9 is disposed (or arranged). Since the ring 9 fastening the elements 6 is thus contacted with the saddle face 10, a contact pressure between the ring 9 and the saddle face 10 is increased in case the belt 1 is transmitting the torque. Meanwhile, when the elements 6 moving ahead in the straight region enter into the groove of the pulleys 2 or 3 and oscillated in the fan-like fashion, the ring 9 slides on the saddle face 10 and this will result in a generation of large frictional force. Therefore, in order not to increase a moment resulting from such frictional force, the saddle face 10 is formed on a portion close to the rocking edge 8 as much as possible. That is, the saddle face 10 is formed at a substantially intermediate portion in the height direction of the saddle face 10.

The ring 9 of the belt 1 is formed by accumulating thin metal layers, and two rows of the rings 9 are arranged parallel to each other in the width direction thereof on the saddle face 10 thereby fastening the elements 6. Here, in the scope of claims, each ring 9 is called as a "ring member". Specifically, a width of the saddle face 10 is wider than a total width of the two rows of rings 9 arranged parallel to each other.

According to the present invention, the ring 9 is disposed on the saddle face 10 to fasten the element array in the circular manner and to hold the elements 6 not to deviate outwardly in the radial direction. However, in addition to the above-mentioned functions, the ring 9 also functions to draw the elements 6 being discharged from the groove of the pulley 2 or 3 out of the groove. For this purpose, in order to prevent the ring 9 from deviating radially outwardly from the elements 6, a stopper portion is formed to hold the ring 9 in the space between the stopper portion and the saddle face 10.

In the example shown in Fig. 9, a hook portion 11 is erected respectively on both width ends of the element 6 while extending upwardly and covering the saddle face 10 partially from above. As shown in Fig. 9, the hook portion 11 is a latch (or inversed L-shaped) portion adapted to hold the width ends of the rings 9 disposed parallel to each other loosely in the clearances between the saddle face 10 and the hook portion 11. End portions of each hook portion 11 are distant from each other, and a clearance therebetween serves as an opening 12 to the saddle face 10. The clearance between the hook portions 11, in other words, an opening width to the saddle face 10 is wider than a width of one of the rings 9, but narrower than a total width of two rows of rings 9.

As described, according to the example of the belt 1 to which the present invention is applied, the individual width of the ring 9 is thus narrower than the width of the opening 12 of the element 6, but the total width of two rows of the rings 9 is thus wider than the width of the opening 12 of the element 6. Therefore, in case of fastening all of the elements 6 by one of the rings 9 previously and then fastening the elements 6 by the other ring 9, the elements 6 fastened by said one of the rings 9 may be disengaged from the ring 9 during the subsequent fastening work of the elements 6 by the other ring 9. Thus, the elements 6 cannot be fastened by the rings 9 smoothly. In addition, the total width of the two rows of rings 9 arranged parallel to each other in the width direction is wider than the width of the opening 12. That is, the rings 9 cannot be disposed on the saddle face 10 of the element 6 while being situated parallel to each other. Therefore, according to the present invention, the belt 1 is assembled and manufactured by a procedure and an apparatus to be explained hereinafter.

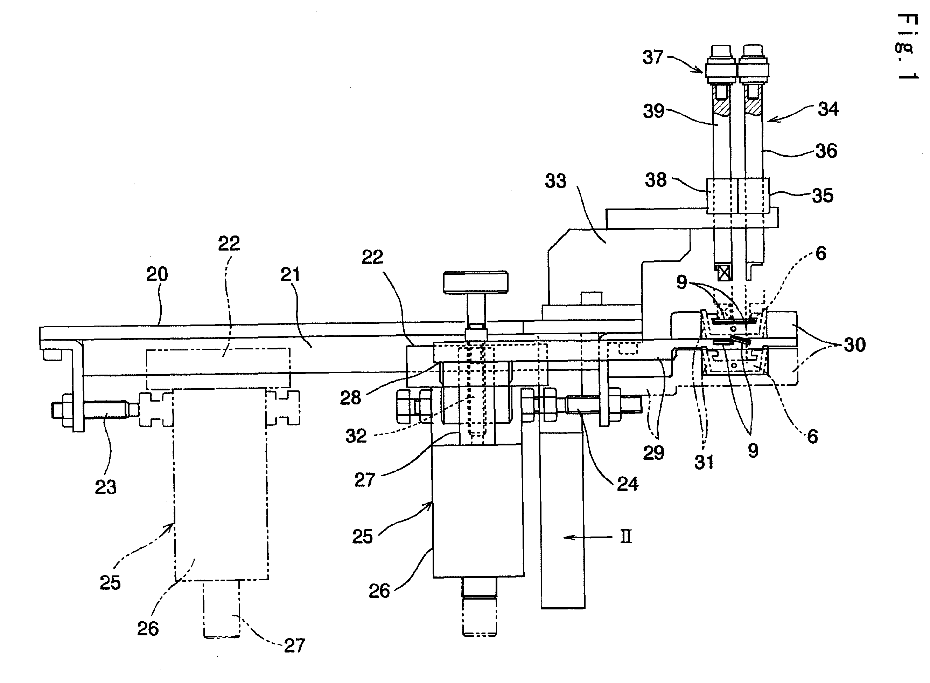

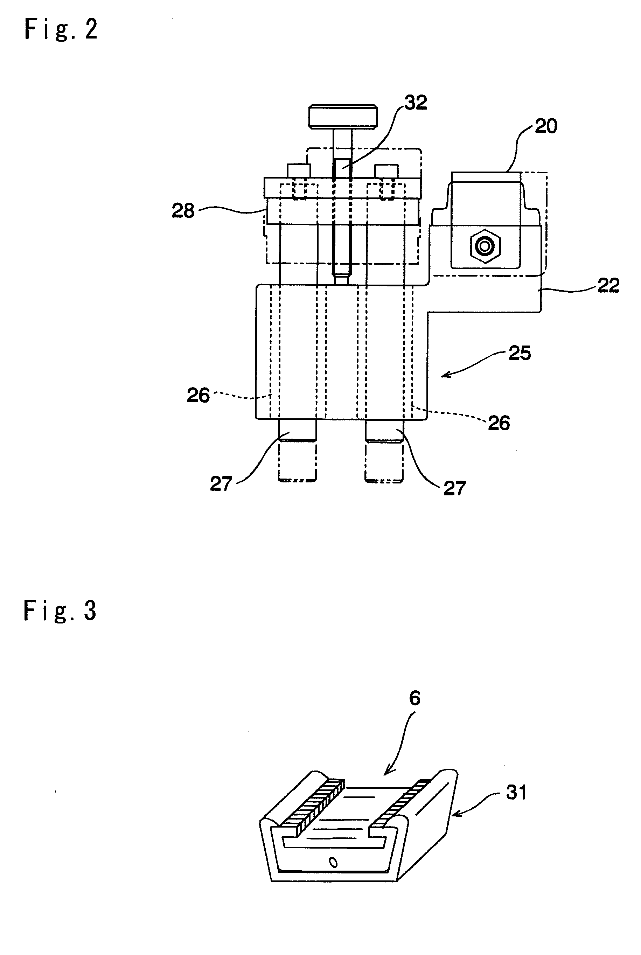

An apparatus for assembling the belt 1 is schematically shown in Figs. 1 and 2. As shown in Fig. 1, a beam 20 as a portion of a rack is arranged in a direction perpendicular to the ring 9 held substantially horizontal and linearly, and a guide rail 21 is situated underneath the beam 20. In addition, a traverser 22 is engaged with the guide rail 21 to be hung therefrom in a slidable manner. Specifically, the traverser 22 is adapted to move forward and backward to get closer to a portion of the ring 9 held linearly and to move away from the portion of the ring 9 held linearly

The traverser 22 can be adapted to be reciprocated not only manually but also by an actuating mechanism. For example, the traverser 22 can be reciprocated by a hydraulic cylinder, an electric cylinder, a gear mechanism such as a rack and pinion, or a precision feeding mechanism such as a ball screw. A travel distance of the traverser 22 can be governed not only by arranging a stopper on the beam 20 to stop the traverser 22 but also by controlling the actuator for reciprocating the traverser 22 numerically to determine a traveling distance of the traverser 22. In the example shown in Fig. 1, stoppers 23 and 24 are used to stop the traverser 22.

In addition, the traverser 22 is integrated with a vertical guide 25 through an arm extending laterally The vertical guide 25 comprises a cylindrical portion 26 oriented vertically, and a rod 27 is inserted into the cylindrical portion 26 in a manner to be reciprocated smoothly in the vertical direction. Further, an elevating platform 28 is attached to an upper portion of the rod 27.

The elevating platform 28 is integrated with an arm 29 extending toward a lower side of a portion of the ring 9 held linearly, that is, toward an inner circumferential side of the ring 9. In addition, a holder 30 is formed on a leading end portion of the arm 29. The holder 30 is adapted to hold a plurality of juxtaposed elements 6 in an orientation to open the openings 12 of the elements 6 toward the inner circumferential face of the ring 9. According to the example thus has been explained, specifically, the plurality of elements 6 to be assembled at a same time is held in a cartridge 31 in advance, as shown in Fig. 3, and the holder 30 is adapted to hold the cartridge 31.

A mechanism for moving the holder 30 up and down, that is, a mechanism for vertically reciprocating the elements 6 to be fitted with the ring 9 will be explained hereinafter. For example, a mechanism to be operated manually, a mechanism which can be controlled electrically such as a hydraulic or electric actuator and so on can be used as this kind of elevating mechanism. Specifically, the elevating mechanism may be arranged between the cylindrical portion 26 of the vertical guide 25 and the elevating platform 28. As shown in Figs. 1 and 2, a screw type mechanism to be operated manually is used in this example. Specifically, a threaded shaft 32 is screwed to penetrate the elevating platform 28 vertically. A leading end (i.e., a lower end) of the threaded shaft 32 is contacted with an upper face of the cylindrical portion 26 of the vertical guide 25.

According to the mechanism shown in Figs. 1 and 2, a protruding length of the threaded shaft 32 downwardly from the elevating platform 28 is increased by rotating the threaded shaft 32 in a direction to screw the threaded shaft 32 into the elevating platform 28. As a result, the elevating platform 28 is lifted relatively. To the contrary, the protruding length of the threaded shaft 32 downwardly from the elevating platform 28 is shortened by rotating the threaded shaft 32 in a direction to unscrew the threaded shaft 32 out of the elevating platform 28. As a result, the elevating platform 28 is moved relatively downwardly Therefore, the holder 30 is moved up and down together with the elevating platform 28. In addition, as the travel distance of the aforementioned traverser 22, an uppermost position and a lowermost position of the elevating platform 28 and the holder 30 integrated therewith can be determined by arranging an appropriate stopper.

As described, the width of the ring is wider than the opening width of the opening 12 of the element 6, and the apparatus shown in Figs. 1 and 2 is adapted to insert the ring 9 into the opening 12 without contacting the side edge of the ring 9 with the opening 12. For this purpose, the assembling apparatus is provided with a pusher for inclining the ring 9 toward the opening 12 by twisting the ring 9 partially Specifically, a bracket 33 is attached to the beam 20, and the bracket 33 extends above the holder 30 situated in front of the bracket 33. In addition, the pusher 34 is attached to the leading end portion of the bracket 33 while being oriented downwardly

The pusher 34 is adapted to push a side end portion of the ring 9 deviated away from a width center of the ring 9 downwardly More specifically, the pusher 34 is adapted to push a portion of the ring 9 close to one of the open ends of the opening 12 (or one of the hook portions 11) of the element 6 held in the holder 30, thereby displacing the portion of the ring 9 slightly in its width direction. Accordingly, the pusher 34 corresponds to the inclining and pushing member of the present invention. The pusher 34 may be pushed downwardly not only manually but also by an actuator reciprocated hydraulically or electromagnetically That is, the pusher 34 can be formed by arranging a rod to penetrate the bracket 33 in a manner to reciprocate along an appropriate guide. Alternatively, the pusher 34 can be formed by arranging a cylinder actuated hydraulically or electromagnetically on the bracket 33.

In the example shown on Figs. 1 and 2, the pusher 34 is formed by a guide sleeve 35 and a rod 36 penetrating through the guide sleeve 35, and the pusher 34 is adapted to be operated manually A role of the rod 36 is to push a limited portion of the ring 9 at the width end of the ring 9. For this purpose, a leading end (i.e., a lower end) portion of the rod 36 is formed into a thin flat plate.

In case of forming the belt 1 by fastening the plurality of elements 6 using a single ring, the assembling apparatus of the present invention is required to be provided only with the aforementioned pusher 34 as a pushing member for pushing the ring. Alternatively, in case of forming the belt 1 by fastening the elements 6 using a plurality of rings, the assembling apparatus of the present invention may be provided with another pusher functioning as a parallel pushing member. Specifically, in the example shown in Figs. 1 and 2, the belt 1 is formed by fastening the elements 6 using two rows of rings 9. As shown in Fig. 1, the assembling apparatus is provided with a pusher (as will be tentatively called a parallel pusher) 37 for downwardly pushing another ring 9 arranged parallel to the ring 9 to be pushed by the aforementioned pusher (as will be tentatively called a canting pusher) 34. For this purpose, the parallel pusher 37 is arranged adjacent to the canting pusher 34.

As the canting pusher 34, the parallel pusher 37 is attached to the leading end portion of the bracket 33 while being oriented downwardly to be opposed to the outer circumferential face of said another ring 9. The parallel pusher 37 may be adapted to be pushed downwardly not only manually but also by an actuator reciprocated hydraulically or electromagnetically That is, the parallel pusher 37 can also be formed by arranging a rod to penetrate the bracket 33 in a manner to reciprocate along an appropriate guide. Alternatively, the parallel pusher 37 can also be formed by arranging a cylinder actuated hydraulically or electromagnetically on the bracket 33.

In the example shown in Figs. 1 and 2, the parallel pusher 37 is formed by a guide sleeve 38 and a rod 39 penetrating through the guide sleeve 38, and the parallel pusher 37 is adapted to be operated manually A role of the rod 39 is to push said another ring 9 downwardly while keeping said another ring 9 horizontally without inclining. For this purpose, a leading end (i.e., a lower end) portion of the rod 39 is designed to have a predetermined width in order not to incline said another ring 9 when pushing said another ring 9 downwardly

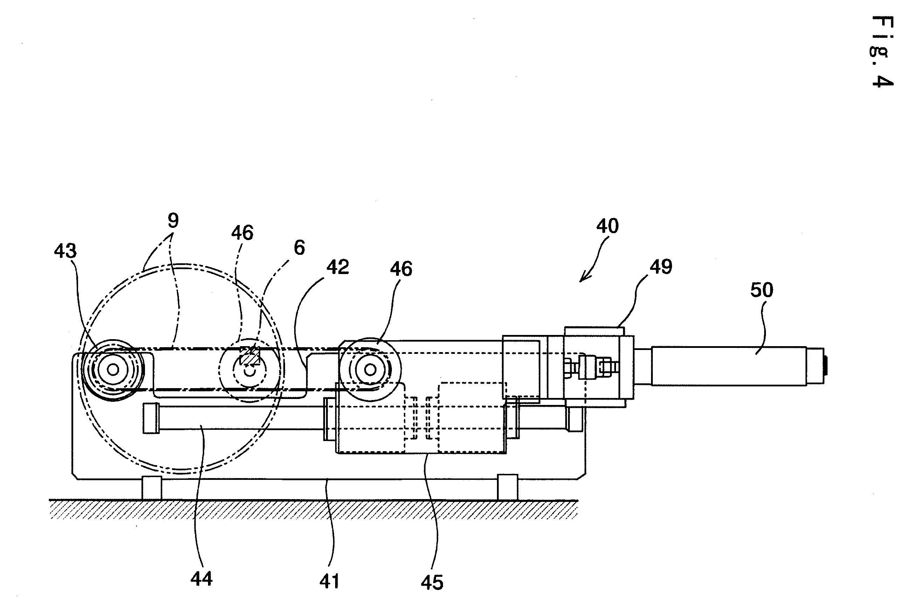

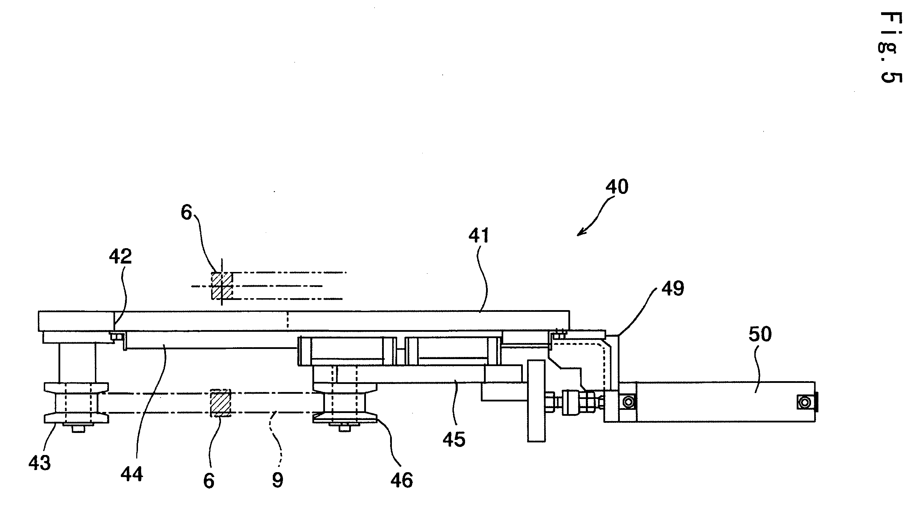

In case of fastening the elements 6 using the ring 9 by the apparatus thus far explained, a portion of the ring 9 to which the elements 6 are attached is preferably be strained substantially horizontally with a predetermined tension. An example of a fixture to keep the ring 9 horizontally is to be explained hereinafter. A fixture 40 shown in Figs. 4 and 5 is adapted to hold two rows of the rings 9 forming the belt 1 ovally or elliptically while keeping the rings 9 parallel to each other Specifically, the fixture 40 comprises a rack 41 as a metal plate erected vertically, and a portion of the rack 41 is eliminated in a rectangle shape at its upper portion to form a cutout 42. A roller 43 is attached rotatably to the rack 41 at one of the end side of the cutout 42 in a horizontal direction (as will be tentatively called a front end portion of the rack 41). Specifically, the roller 43 serves as a receiving member, and the roller 43 is mounted on a support shaft attached to a side face of the rack 41 to protrude horizontally.

A linear guide 44 is attached to the side face of the rack 41 below the cutout 42 to extend horizontally, and a slider 45 is engaged with the linear guide 44 in a manner to slide back and forth horizontally. The slider 45 is a flat plate member, and a roller 46 paired with the roller 43 is attached to a side face of the slider 45. Specifically, a support shaft is attached to the side face of the slider 45 to protrude horizontally in parallel with a rotation axis of the roller 43, and the roller 46 is mounted on the support shaft in a rotatable manner. Accordingly this another roller 46 also serves as a receiving member together with the aforementioned roller 43.

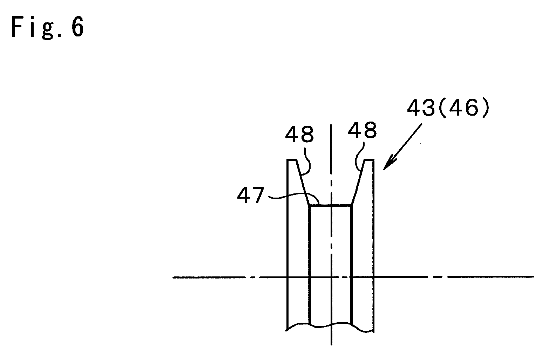

To the rollers 43 and 46, the aforementioned ring 9 is applied directly, or an array of the elements 6 attached to the ring 9 is applied, and the rollers 43 and 46 are adapted to apply a predetermined tension to the ring 9 on the rollers 43 and 46. For this purpose, the rollers 43 and 46 are respectively provided with a groove whose shape is congruent with the ring 9 and the element 6. An example of the groove of the rollers 43 and 46 is shown in Fig. 6. As shown in Fig. 6, a trunk portion 47 is formed on an outer circumferential face of the rollers 43 (or 46), and a width of the trunk portion 47 is substantially identical to a total width of two rows of the rings 9. In addition, inner walls 48 are formed on both axially end portions of the trunk portion 47 to extend radially outwardly in a manner to widen a clearance therebetween. Thus, the groove is formed by the trunk portion 47 and the inner walls 48.

Specifically, the width of the trunk portion 47 is identical to that of the saddle face 10 of the element 6 or slightly narrower than that of the saddle face 10 of the element 6. Meanwhile, the narrowest width of the element 6 is wider than the widths of the saddle face 10 and the trunk portion 47. Therefore, two rows of the rings 9 are contacted to the trunk portion 47 when applied to the roller 43 or 46, and the element 6 is sandwiched between the inner walls 48 in the outer circumferential side from the trunk portion 47 when applied to the roller 43 or 46. Accordingly, the trunk portion 47 serves as a first receiving face, and the inner walls 48 serve as second receiving faces.

In order to apply a predetermined tension to the ring 9 being applied to the rollers 43 and 46, the fixture 40 is provided with an actuator Specifically, a bracket 49 is attached to a rear end portion of the rack 41 (i.e., to the opposite side of the front end portion to which the roller 43 is attached), and a pulling cylinder 50 is attached to the bracket 49 in a manner to orient a rod thereof to the slider 45. Specifically, the pulling cylinder 50 is a direct actuating type actuator such as an air cylinder, a hydraulic actuator, an electric cylinder and so on, and the rod of the pulling cylinder 50 is connected with the slider 45.

The pulling cylinder 50 is adapted to move the slider 45 backwardly toward the right side in Figs. 4 and 5 thereby widening a distance between the rollers 43 and 46 to apply a tension to the ring 9. For this purpose, a rod of the pulling cylinder 50 is drawn backwardly when a hydraulic pressure or an electric power is supplied to the pulling cylinder 50, and the rod is returned by a return spring or the like. Therefore, a single actuating type actuator, which is incapable of generating a thrust force in an opposite direction to return the rod, can be used as the pulling cylinder 50. In addition, the tension applied to the ring 9 is kept constant to a predetermined tension. For example, a pressure to be supplied to the pulling cylinder 50 is kept constant by a regulator valve or the like to keep the force for pulling the slider 45 constant.

Therefore, even if the distance between the rotational axes of the rollers 43 and 46 is varied between a case in which the ring 9 is applied directly to the rollers 43 and 46, and a case in which the elements 6 attached to the ring 9 are applied to the rollers 43 and 46, the tension of the ring 9 is kept constant by moving the slider 45 in the amount of the difference in the distance between the rotational axes of the rollers 43 and 46. With respect to the fixture 40, the assembling apparatus is arranged in an orientation in which the holder 30 is allowed to be situated in the inner circumferential side of the ring 9 through the cutout 42 of the rack 41, and the pushers 34 and 37 are situated above the strained portion of the ring 9.

Next, an action of the above-explained assembling apparatus, that is, an assembling method and a manufacturing method of the present invention will be explained hereinafter. First of all, the holder 30 is moved backwardly together with the traverser 22, and the pushers 34 and 37 are moved to the upper most positions thereof. In this situation, the ring 9 is disposed on a position to be engaged with the element 6. Specifically, two rows of the rings 9 are applied to the rollers 43 and 46 of the fixture 40 while being arranged parallel to each other, and a predetermined tension is applied to the rings 9 by moving the slider 45 backwardly by the pulling cylinder 50 to widen a distance between the rollers 43 and 46. As a result, the rings 9 are strained linearly between the roller 43 and 46.

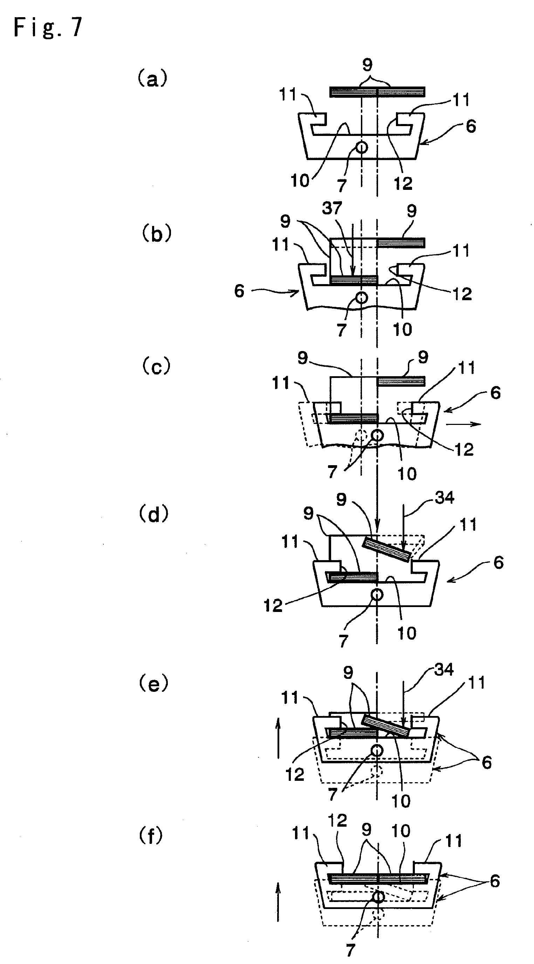

Meanwhile, a predetermined number of the elements 6 are set in the cartridge 31 shown in Fig. 3 while being juxtaposed in a same orientation, and the cartridge thus holding the elements 6 therein is mounted on the holder 30 moved backwardly. In this situation, the holder 30 is moved down together with the platform 28. Then, an array of the elements 6 mounted on the holder 30 is moved to the inner circumferential side of the rings 9 by moving the traverser 22 forward to the right side in Fig. 1. In this situation, the holder 30 is moved forward and stopped at a position where the width center of one of the rings 9 closer to the assembling apparatus is almost aligned with the width center of the element 6. This situation is shown in Fig. 7(a).

Then, the aforementioned parallel pusher 37 is actuated to move the rod 39 thereof downwardly. As a result, one of the rings 9 situated underneath the rod 39 is pushed downwardly by the rod 39 and pushed onto the saddle face 10 through the opening 12 of the element 6. This is because the width centers of the ring 9 being pushed and the element 6 are aligned with each other, and the individual width of the ring 9 is narrower than the width of the opening 12. This situation is shown in Fig. 7(b).

When one of the rings 9 is thus being pushed onto the saddle face 10, the holder 30 is slightly moved forward together with the traverser 22. That is, the element 6 in which one of the rings 9 is disposed on the saddle face 10 is moved toward the right side in Figs. 1 and 7. As a result, the side edge of the ring 9 on the saddle face 10 is inserted into a clearance between the hook portion 11 and the saddle face 10 to be held by the hook portion 11. This situation is shown in Fig. 7(c).

After thus engaging one of the rings 9 with the element 6, the parallel pusher 37 is returned upwardly thereby releasing the pushed ring 9. The purpose of such withdrawal of the parallel pusher 37 is to prevent the other ring 9 from being contacted with the parallel pusher 37 when pushed and inclined at the subsequent step to be overlapped partially on the ring 9 already disposed on the saddle face 10. Here, in order to prevent the element 6 from being hanged by the tension of the ring 9 thus released from the pushing force of the parallel pusher 37, an appropriate clamp (not shown) is arranged. The clamp may be arranged not only on the holder 30 but also arranged separately from the holder 30. In addition, the clamp may be adapted not only to hold the element 6 but also to hold the cartridge 31.

When the parallel pusher 37 is thus being withdrawn upwardly, the canting pusher 34 is actuated to move the rod 36 thereof downwardly. The canting pusher 34 is adapted to push a side edge of the other ring 9 (i.e., the right side edge in Figs. 1 and 7) by applying a load thereto. Therefore, the other ring 9 is pushed to be inclined by the rod 36 being moved downwardly, and slightly displaced toward the ring 9 already disposed on the saddle face 10. Here, in case the canting pusher 34 is adapted to be actuated manually, the lowest position and the pushing force of the rod 36 may be set by adjusting the pushing amount manually and then locking the rod 36. Alternatively, in case of using an appropriate accumulator to move the rod 36, the lowest position of the rod 36 may be set by a stopper (not shown), and the pushing force of the rod 36 may be adjusted electrically In order to displace the ring 9 being pushed by the rod 36 certainly, the rod 36 may be provided with an inclined face for producing a component force toward the ring 9 disposed on the saddle face 10. In addition, in order to move the rings 9 relatively close together thereby overlapping the rings 9 partially, the holder 30 may be moved forward little bit more thereby moving the element 6 slightly toward the right side in Fig. 7. This situation is shown in Fig. 7(d). As shown in Fig. 7(d), inner side edges of the rings 9 being moved close together are overlapped in a vertical direction.

When the other ring 9 is being pushed downwardly by the canting pusher 34, the holder 30 holding the elements 6 is lifted. As described, the other ring 9 is inclined and slightly displaced from the width center of the element 6. Therefore, the other ring 9 is allowed to reach the saddle face 10 through the opening 12 without being contacted with the hook portion 11. In order to stop elevation of the holder 30, the pushing force of the canting pusher 34 is set larger than the pushing force to push up the holder 30. Therefore, the elevation of the holder 30, that is, the elevation of the element 6 is stopped when the other ring 9 is pushed onto the saddle face 10. This situation is shown in Fig. 7(e). As shown in Fig. 7(e), the element 6 is lifted to a level at which the saddle face 10 comes to a substantially same level of the rings 9 strained by the tension established by the rollers 43 and 46 of the fixture 40.

Then, the rod 36 of the canting pusher 34 is withdrawn to release the other ring 9 from the pushing force of the canting pusher 34. As a result, the torsion of the other ring 9 is eliminated by the tension itself. In this situation, the pushing force is still being applied to the holder 30 so that the elements 6 in the holder 30 are further lifted. As a result, the tensions of the rings 9 are increased. Therefore, the rings 9 are returned to an initial arrangement, in other words, the two rows of rings 9 are again situated parallel to each other. That is, the rings 9 are arranged parallel to each other on the saddle face 10, and the outer side edges of those rings 9 are respectively inserted into the space inside of the hook portion 11 to be held by the hook portions 11. Consequently, the fitting work of the elements 6 with the rings 9 is finished. This situation is shown in Fig. 7(f).

Then, the elevating platform 28 is moved downwardly thereby moving the holder 30 downwardly toward the inner circumferential side of the ring 9 while holding the cartridge 31. As a result, the elements 6 are dismounted from the cartridge 31 while being engaged with the rings 9. Then, the traverser 22 is moved backwardly to the initial position, and the holder 30 is also returned to the initial position to be prepared for the subsequent fitting work of the element 6. The set of the elements 6 thus engaged with the rings 9 are moved away from the assembling position toward any one of the rollers 43 and 46 of the fixture 40 by rotating the rollers 43 and 46 thereby driving the rings 9.

Thus, according to the assembling apparatus, the assembling method, and the manufacturing method of the present invention, the rings 9 can be engaged easily with the elements 6 and held by the hook portions 11. Specifically, the rings 9 can be entered easily into the opening 12 to insert the outer side edges thereof into the clearances between the saddle face 10 and the hook portions 11, by moving the element 6 vertically and horizontally and by pushing the rings 9 downwardly Since the procedures during such fitting work are quite simple, the belt 1 can be assembled or manufactured efficiently

In the example thus has been explained, the elements 6 are fastened in a circular manner by two rows of the rings 9 to assemble the belt 1, and the total width of the rings 9 is wider than the opening width of the opening 12. However, the present invention should not be limited to the example thus has been explained. For example, the present invention can be applied to a case of assembling a belt by fastening the elements by a single ring whose width is wider than the opening width of the opening 12. That is, the present invention can be applied to an assembling work of a belt by pushing a side edge of any of the rings to incline and to displace the pushed ring slightly in its width direction, thereby disposing the pushed ring on the saddle face of the element without contacting the pushed ring with the hook portion.

## Claims

1. A belt assembling apparatus for assembling a belt, by fastening a plurality of plate-like elements juxtaposed in a same orientation and in a circular manner, using a ring having a width wider than an opening width of an opening formed in the element, **characterized by** comprising:
an element holding member, which holds the elements in an inner circumferential side of the ring in an orientation to open the opening of the element toward an inner circumferential face of the ring;
an inclining and pushing member, which inclines the ring while displacing the ring widthwise relatively; and
wherein the elements held by the holding member are attached to the ring by relatively approximating the inclined ring and the elements thereby letting the ring through the opening.

2. The belt assembling apparatus as claimed in claim 1, wherein:
the inclining and pushing member includes a member which pushes an outer circumferential face of the ring partially toward the opening, at a side of one of open ends of the opening.

3. The belt assembling apparatus as claimed in claim 1 or 2, wherein:
the ring is formed by a plurality of ring members; and
an individual width of the ring member is narrower than the opening width of the opening but a total width of the ring members being arranged parallel to each other is wider than the opening width of the opening.

4. The belt assembling apparatus as claimed in claim 3, wherein:
the element holding member is adapted to hold the element in the inner circumferential side of the ring members arranged parallel to each other;
the inclining and pushing member is adapted to push one of the ring members arranged parallel to each other situated on the side of one of the open ends; and
the belt assembling apparatus comprises a parallel pushing member which pushes another ring member toward the element through the opening prior to pushing said one of the ring members toward the opening by the inclining and pushing member.

5. The belt assembling apparatus as claimed in claim 4, wherein:
the element comprises a saddle face on which the ring formed by arranging the two rows of ring members parallel to each other is disposed, and a stopper portion which is erected respectively on width ends of the saddle face to protrude toward an outer circumferential side in case the elements are juxtaposed in a circular manner, and which is adapted to hold the ring disposed on the saddle face; and
a clearance between the stopper portions serves as the opening.

6. The belt assembling apparatus as claimed in any of claims 1 to 5, wherein:
the element holding member is adapted to reciprocate between a position at the inner circumference of the ring and a position deviated away from the inner circumference of the ring in an axial direction of the ring.

7. The belt assembling apparatus as claimed in any of claims 4 to 6, wherein:
the inclining and pushing member and the parallel pushing member are arranged adjacent to each other in a width direction of the ring members arranged parallel to each other.

8. A belt assembling method for assembling a belt, by fastening a plurality of plate-like elements in a same orientation and in a circular manner, using a ring having a width wider than an opening width of an opening formed in the element, **characterized by** comprising:
holding the elements in an inner circumferential side of the ring in an orientation to open the opening of the element toward an inner circumferential face of the ring;
inclining the ring while displacing widthwise by pushing an outer circumferential face of the ring partially toward the opening, at a side of one of open ends of the opening; and
relatively moving the ring and the element close to each other thereby letting the inclined ring through the opening to fit the ring with the element.

9. The belt assembling method as claimed in claim 8, wherein:
the ring is formed by a plurality of ring members; and
an individual width of the ring member is narrower than the opening width of the opening but a total width of the ring members being arranged parallel to each other is wider than the opening width of the opening.

10. The belt assembling method as claimed in claim 9, wherein:
the element comprises a saddle face on which the ring formed by arranging the two rows of ring members parallel to each other is disposed, and a stopper portion which is erected respectively on width ends of the saddle face to protrude toward an outer circumferential side in case the elements are juxtaposed in a circular manner, and which is adapted to hold the ring disposed on the saddle face; and
a clearance between the stopper portions serves as the opening.

11. A belt manufacturing method for manufacturing a belt, by fastening a plurality of plate-like elements in a same orientation and in a circular manner, using a ring having a width wider than an opening width of an opening formed in the element, **characterized by** comprising:
holding the ring while applying a predetermined tension to the ring;
holding the elements in an inner circumferential side of the ring in an orientation to open the opening of the element toward an inner circumferential face of the ring;
inclining the ring while displacing widthwise by pushing an outer circumferential face of the ring partially toward the opening, at a side of one of open ends of the opening; and
relatively moving the ring and the element close to each other thereby letting the inclined ring through the opening to fit the ring with the element.

12. The belt manufacturing method as claimed in claim 11, wherein:
the ring is formed by a plurality of ring members; and
an individual width of the ring member is narrower than the opening width of the opening but a total width of a case in which the ring members are arranged parallel to each other is wider than the opening width of the opening.

13. The belt manufacturing method as claimed in claim 12, wherein:
the element comprises a saddle face on which the ring formed by arranging the two rows of ring members parallel to each other is disposed, and a stopper portion which is erected respectively on width ends of the saddle face to protrude toward an outer circumferential side in case the elements are juxtaposed in a circular manner, and which is adapted to hold the ring disposed on the saddle face; and
a clearance between the stopper portions serves as the opening.
